# EUROPEAN PATENT SPECIFICATION

(11) **EP 0 551 209 B1**
(45) Date of publication and mention of the grant of the patent: **25.10.1995**
(21) Application number: 93300129.9
(22) Date of filing: 08.01.1993
(51) Int. Cl.: F02B 27/02

(54) **Induction systems for internal combustion engines**
Einlasssystem für Brennkraftmaschinen
Système d'admission pour moteurs à combustion interne

(30) Priority: 09.01.1992 GB 9200425
(43) Date of publication of application: 14.07.1993
(73) Proprietor: RICARDO CONSULTING ENGINEERS LIMITED, West Sussex BN4 5FG (GB)
(72) Inventor: Hundleby, Giles Edward, Horsham, West Sussex (GB); Lake, Timothy Hugh, Upper Beeding, West Sussex (GB); Love, Martin, Henfield, West Sussex (GB)
(74) Representative: Jennings, Nigel Robin

(56) References cited:
- DE-A- 4 028 489
- US-A- 2 835 235
- US-A- 4 619 226
- US-A- 4 919 086
- PATENT ABSTRACTS OF JAPAN vol. 10, no. 243 (M-536)(2398) 19 November 1986 & JP-A-61 142 326

## Description

The present invention relates to internal combustion engines of reciprocating piston type and more particularly to induction systems for such engines of the type including an air inlet, a first inlet duct communicating with an inlet port into a cylinder of the engine, a supplementary duct and a second inlet duct which is connected in parallel with the first inlet duct and communicates with the same cylinder and valve means which is movable between a first position in which air flows from the air inlet into the cylinder through the first and second inlet ducts and a second position in which air flows from the air inlet into the cylinder only through the first inlet duct via the supplementary duct, said valve means includes a cylindrical drum (6) whose interior communicates with the air inlet.

Engines consume air which is induced through a system of ducts and chambers leading to the intake valves. When each inlet valve opens, air (or an air/fuel mixture) enters the associated cylinder due to the downward motion of the piston causing a reduction in pressure in the cylinder. The output torque produced by the engine at a given speed is dictated largely by the quantity of fuel which can be burned during each combustion stroke and this depends on the mass of air which can be induced into the cylinder. For any given speed it is therefore advantageous to induce the greatest possible mass of air into the cylinder, that is to say, to maximise the volumetric efficiency of the induction process.

During the induction process of a four stroke engine it is normally arranged for the inlet valve to remain open when the piston reaches the bottom of the inlet stroke. This is because, despite the fact that the piston is no longer moving, air continues to enter the cylinder under the influence of the kinetic energy or momentum of the air travelling through the induction system. The pressure in the cylinder rises due to the increasing mass of air within it until there is no further flow of air into the cylinder. It is normally arranged for the inlet valve to close at or near this point in the cycle. Advantage can, therefore, be taken of the kinetic energy of the air within the induction system to increase the mass of air induced into the cylinder.

At low engine speeds, the velocity of the inlet air in the induction system is lower than at high engine speeds. Since the kinetic energy of the air is proportional to the square of the velocity, this causes a reduction in the kinetic energy effect and hence a reduction in volumetric efficiency and in the output torque, at low engine speeds.

A known solution to this problem is to use a dual area induction system which allows the velocity of the air to be increased at low engine speeds compared with a single area system. Such systems typically include two parallel ducts which communicate with the same inlet port, one of which can be selectively blocked by a valve arrangement. At low engine speeds only one of the ducts is open. This increases the velocity, and hence kinetic energy, of the air travelling through the induction system. At high engine speeds the valve opens to allow flow through both ducts so that the induction of air is not restricted.

When an engine inlet valve associated with an induction system opens, a depression or reduction in the air pressure occurs immediately upstream of the valve. This depression travels in the form of a wave, against the flow of air, towards the upstream end of the induction duct. It is a known phenomenon that when the depression reaches an opening or large volume chamber, it is reflected back towards the valve as an increase in pressure. If this increased pressure wave reaches the inlet valve before it closes, it has the effect of forcing additional air into the cylinder. Thus, this effect also provides an improvement in volumetric efficiency and an increase in torque. However, this improvement in torque can only be provided across a very limited speed range since the speed at which the pressure waves travel is substantially constant but the time for which the inlet valve is open varies in proportion to engine speed. It is common practice to tune the length of the intake duct so that maximum benefit is gained from this effect at high engine speeds. At low engine speeds, therefore, no improvement in volumetric efficiency or output torque can be gained from the reflected pressure wave effect.

GB-A-2221954 discloses a solution to this problem. This specification discloses an induction system including a dual length inlet duct which comprises two portions of which one communicates at one end with the engine and at the other end with a rotary valve which selectively connects it either directly to an inlet air plenum or to one end of the other portion, whose other end communicates with the inlet air plenum. The length of the inlet duct is thus selectively variable between two different values and is varied in dependence on the engine speed so that the reflected pressure wave effect may be used at both high and low engine speeds.

A similar induction system, which is of the generic type referred to above, is disclosed in JP-A-60142013 (family member of US-A-4619226) on which the precharacterising portion of claim 1 is based, in which there are two inlet ducts in parallel which communicate with respective inlet ports and with respective supplementary ducts which communicate with a common inlet manifold via respective openings in a rotatable drum. As the drum is rotated the effective length of the supplementary ducts varies whereby the length of the inlet paths into the cylinder is continuously variable. One of the inlet ducts includes a butterfly valve which is closed at low engine speeds, so that all the inlet air flows in through the other inlet duct, but is open at high engine speeds.

Dual area and dual length induction systems are extremely advantageous in that they both increase the low speed volumetric efficiency of an engine and they are used together in the construction disclosed in US-A-4619226. However, this prior construction requires two inlet ports for each cylinder, that is to say one inlet port for each inlet duct, and also two separate valves, that is to say the rotatable drum valve and the butterfly valve. It is thus an object of the present invention to provide an induction system of the type referred to above which has two or more different lengths and also two or more different areas but which is simpler and more reliable than that disclosed in US-A-4619226 and only requires one inlet port per cylinder.

According to the present invention an induction system of the type referred to above is characterised in that the first and second inlet ducts communicate with the same inlet port and that in the cylindrical drum wall two or more openings are formed, the drum being rotatable about its axis between the second position in which one opening communicates with the supplementary duct and the other opening(s) are blocked and the first position in which two openings communicate with the first and second inlet ducts.

Thus in the induction system in accordance with the present invention the cylindrical drum may occupy first and second positions at high and low engine speeds respectively. At high engine speeds the air inlet communicates with both the inlet ducts and the inlet air therefore flows to the associated cylinder through a relatively short flow path of relatively large cross-sectional area. At low engine speeds the inlet does not communicate with the second inlet duct but communicates only with the first inlet duct via the supplementary duct. The air flow passage is therefore of lesser cross-section and of greater length than at high engine speeds whereby both the kinetic energy effect and the pressure wave reflection effect may be made use of effectively at both high and low engine speeds. However, these effects of the invention are achieved without the use of a butterfly valve in addition to the cylindrical drum and only one inlet port per valve is required.

The supplementary duct may be a wholly separate duct but it is preferred for reasons of simplicity and compactness that it is defined by the outer surface of the drum and the inner surface of a housing containing the drum.

Depending on the number of openings in the drum and the instantaneous position of the drum, it may be necessary for one or more openings in the drum to be blocked. In one embodiment of the invention this is achieved by rotatably positioning the drum within a fixed cylinder in which three openings are formed which communicate with the first duct, the second duct and the supplementary duct, respectively.

The first inlet duct is open to the flow of air at all times and is connected to the air inlet either directly or via the supplementary duct, depending on the angular position of the drum. The second inlet duct is open to the flow of air only when the drum is in the high engine speed position. In the low engine speed position it is blocked at its upstream end by the drum. This normally means that the downstream end of the second duct is open to the flow of air through the first inlet duct. This may constitute a problem since the second inlet duct may act as a dead volume damping out or reflecting pressure waves. It may therefore also be desirable to block the downstream end of the second duct when the valve is in the low engine speed position. This is conveniently achieved in one embodiment of the invention by the provision of valve means situated at the downstream end of the second duct and by connecting means which connect the two valve means together and are so arranged that the valve means in the second duct moves between the open and closed positions as the drum moves between the first and second positions.

When the drum is in the high engine speed position, air is free to travel from the air inlet directly into the first and second inlet ducts. The air flowing into the first inlet duct is also free to pass into the supplementary duct which is open at that end at which it communicates with the first inlet duct. Although significant flow into the supplementary duct cannot occur, unwanted pressure wave effects may be caused. This is prevented in one embodiment of the invention by the provision of an outwardly extending flap on the drum which is so arranged that when the drum is in the first position the flap blocks communication between the first and supplementary ducts and when the flap is in the second position the flap permits communication between the first and supplementary ducts and is substantially flush with a wall of the first duct.

In the embodiments discussed above, the induction system has an inlet air pathway of two different lengths and two different areas. However, by suitable modification it is possible to provide three or more different lengths and/or three or more different areas thereby providing further advantages as regards the engine torque characteristics. Thus a further embodiment of the invention is characterised in that a third inlet duct is provided, that the valve means includes a cylindrical drum having inner and outer walls which together define the supplementary duct and in which a plurality of openings is formed and that the drum is rotatable between first, second and third positions in which the air inlet communicates with the first inlet duct only via the supplementary duct, with the first and second inlet ducts only via a portion of the supplementary duct and with the first, second and third inlet ducts, respectively.

The present invention also embraces a reciprocating internal combustion engine including an induction system of the type referred to above. If the engine includes a plurality of cylinders it will include a plurality of such induction systems. Whilst the drums of the various induction systems may be separate and actuated separately, it is preferred that they are connected together to form an integral unit.

Such an engine will include an inlet valve associated with each cylinder and cooperating with an inlet port formed in a cylinder head and it is preferred that the first and second ducts are within a common pipe and are separated by a common partition wall. The partition wall may extend beyond the common pipe into the inlet port or alternatively, particularly in the case in which a valve is provided at the downstream end of the second inlet duct, it may terminate at the junction of the cylinder head with the common pipe.

The induction systems described above are ideally suited to in-line engines, that is to say engines including a plurality of cylinders arranged in a single line, where all the first and second inlet ducts are connected to the same side of the drum. If the engine is of "V" type with the cylinders arranged in two rows, it is desirable for the induction systems to be positioned between the two rows of cylinders and in this event the first and second ducts for the two rows of cylinders are ideally connected to opposite sides of the drums. This is conveniently achieved if each cylinder is connected to an induction system in which the drum is rotatably received within a fixed cylinder in which three openings are formed which communicate with the first duct, the second duct and the supplementary duct, respectively and if the drums associated with one row of cylinders have two openings formed in them and the drums associated with the other row of cylinders have
three openings formed in them, all the drums being connected together to form an integral unit. In this construction, rotation of the integral drum unit in one direction or the other will result in all the induction systems moving simultaneously between the low speed and high speed positions notwithstanding the fact that the first and second ducts associated with the two different rows of cylinders communicate with their respective drum on opposite sides.

Further details of the invention will be apparent from the following description of certain specific embodiments of induction system in accordance with the invention which is given with reference to the accompanying diagrammatic drawings, in which:
Figure 1 is a sectional view of a first embodiment of induction system showing the rotary drum in the low engine speed position;
Figure 2 is a similar view of the system of Figure 1 with the drum in the high engine speed position;
Figure 3 is a similar view to Figure 1 showing a second embodiment of the invention;
Figure 4 shows a third embodiment of the invention, which is for use with a cylinder of the left hand row of cylinders of a "V" engine, in the low engine speed position;
Figure 5 is a similar view to Figure 4 except that the section is taken through the induction system for use with a cylinder of the right hand row of cylinders of the "V" engine;
Figures 6 to 8 show a fourth embodiment of the invention in the low, mid range and high speed positions, respectively; and
Figures 9A to 9D are highly schematic views of the important portion of the induction systems of the two inlet valves of a twin inlet valve engine at differing speed and load conditions.

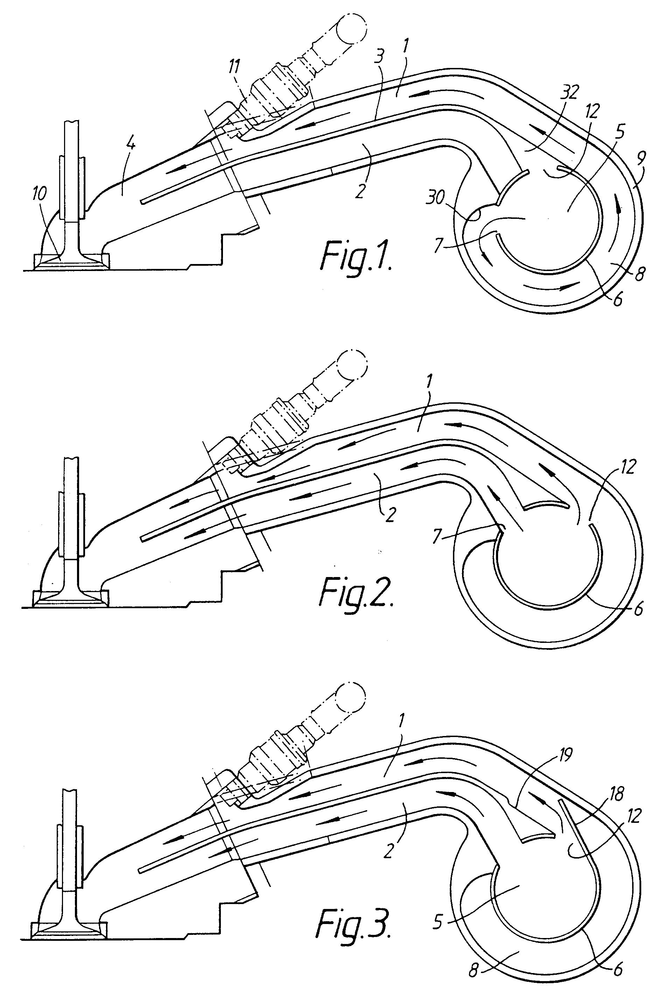

Figures 1 and 2 show an induction system for a single cylinder engine or one cylinder of a multiple cylinder engine. In the event that the engine has more than one cylinder, similar induction systems will be associated with each of them. The induction system comprises a first inlet duct 1 and a second inlet duct 2 which are separated from one another by a dividing wall 3 and which preferably extend into the inlet port 4 of the associated cylinder, that is to say into the region within the cylinder head directly upstream of the associated inlet valve 10. A fuel injector 11 is arranged to inject fuel into, or shortly upstream of, the inlet port 4. At the upstream end of the ducts 1 and 2 there is a rotatable drum 6 which constitutes a valve in the nature of a rotary gate valve and which defines a chamber 5 which is in communication with or constitutes part of the air inlet pipe or manifold. Extending around a major proportion of the circumference of the drum 6 is a supplementary duct 8 whose outer surface is defined by a casing 9. At one end, seen on the left in Figures 1 and 2, the duct 8 is closed by a transverse wall 30 and at its other end it merges into the inlet duct 1.

Formed in the wall of the drum 6 are two apertures 7 and 12. The drum is movable between a low speed position, seen in Figure 1, in which the aperture 12 is blocked by a wall or baffle 32, which is connected to or forms part of the partition wall 3, and the aperture 7 communicates with the closed end of the supplementary duct 8, and a high speed position, seen in Figure 2, in which the apertures 7 and 12 communicate with the inlet ducts 2 and 1, respectively. As will be clear, at low engine speeds, the inlet air all flows through the relatively long and narrow passage constituted by the ducts 1 and 8. At high engine speeds, the inlet air flows through the relatively shorter and wider passage constituted by the two parallel ducts 1 and 2. In each case the cross-sectional area and length of the passage are selected so as to utilise both the kinetic energy effect and the reflected pressure wave effect, and thus to increase the engine output torque over a selected range of engine speeds.

Figure 3 shows a further embodiment in which the drum 6 carries a generally tangentially extending flap 18. In the high speed position illustrated in Figure 3, the flap 18 prevents communication of the ducts 1 and 8 and thus prevents any undesired pressure wave effects due to the presence of the duct 8. In the low speed position, the flap 18 is received in a recess 19 in the wall of the duct 1 so that a smooth wall surface is presented to the air flow.

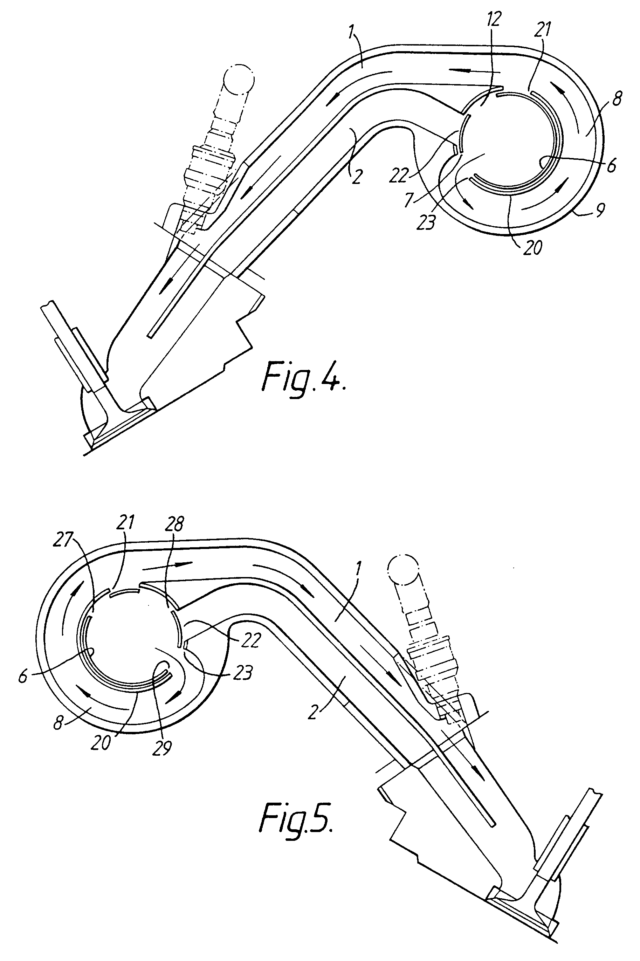

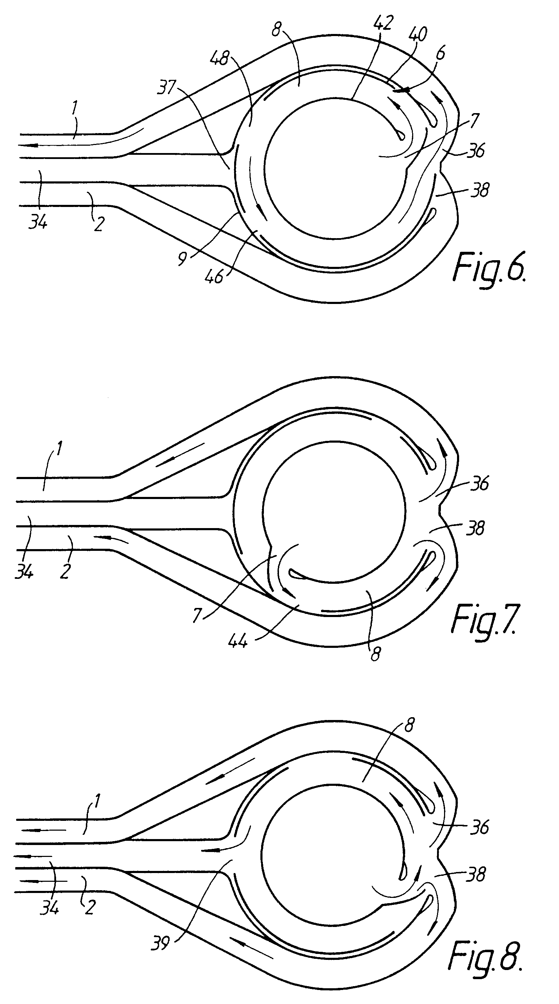

If the engine to which the induction system is to be fitted is of "V" configuration, then the embodiment of Figures 4 and 5 may be preferred since it permits the first and second inlet ducts 1 and 2 to communicate with the chamber 5 on either side in a symmetrical fashion.

Figure 4 shows the induction system for one of the left hand row of cylinders which again includes first and second ducts 1 and 2 and a rotatable drum 6. The drum 6 is received within a fixed cylinder 20 in whose wall three openings 21, 22 and 23 are formed. Openings 21 and 22 communicate with the first and second ducts 1 and 2, respectively whilst opening 23 communicates with the upstream end of the circumferential duct 8 which in this case is defined by the cylinder 20 and the outer casing 9. The drum 6 has two openings 7 and 12, as before. In the low engine speed position shown in Figure 4 opening 7 is aligned with opening 23 and opening 12 is blocked so that all the air flows through the ducts 8 and 1. The drum 6 is rotated clockwise into the high engine speed position (not shown) in which openings 12 and 7 are in registry with openings 21 and 22, respectively and the inlet air flows through the two parallel ducts 1 and 2.

Figure 5 shows the induction system for one of the right hand cylinders of the "V" engine. All the static parts of the system form a mirror image, about a vertical axis, of the static parts shown in Figure 4. However, the drum 6 has three openings 27, 28 and 29. In the low engine speed position, shown in Figure 4, the openings 27 and 28 are blocked and the opening 29 is in registry with the opening 23 in the fixed drum 20 so that the air flows through the ducts 8 and 1. The drum 6 again moves in the clockwise direction into the high speed position and in this position the opening 29 is blocked and the openings 27 and 28 are in registry with the openings 21 and 22, respectively, so that the air flows through the ducts 1 and 2.

Since the drum 6 moves in the same direction for both the right and left cylinders of the engine they may be constituted by a single drum whereby the sectional views of the drums 6 in Figures 4 and 5 show the same drum but at different points along its length. This results in a considerable economy in manufacturing expense and a reduction in constructional complexity. Similarly, in the embodiments of Figures 1 to 3 (and also Figures 6 to 8 described below), it is convenient for the drums of all the cylinders of the engine to be constituted by a single, elongate drum in which the appropriate openings are formed.

The embodiments described above relate to an induction system with two different areas and two different lengths, but the embodiment shown in Figures 6 to 8, from which the inlet valve and inlet port have been omitted for the sake of clarity, provides three different areas and three different lengths. In addition to the first and second inlet ducts 1 and 2, there is a third inlet duct 34. These inlet ducts communicate with the interior of the casing 9 through respective openings 36,38 and 37. The rotatable drum 6 comprises two concentric walls, of which the inner wall 42 has a single opening 7 and the outer wall 40 has an opening 44 generally aligned with the opening 7 and two further openings 46 and 48 spaced about 150° from the opening 44 in opposite directions. The space between the two walls 40,42 constitutes the supplementary duct 8. Extending from the inner wall 42 from a point adjacent one side of the opening 7 to the outer wall 40 is a flap 50 which substantially blocks the supplementary duct 8 on that side of the opening 7.

In the low speed position shown in Figure 6, the interior of the drum 6 communicates via the opening 7, supplementary duct 8, which extends right round the drum 6, and opening 36 with the first inlet duct 1. The inlet ducts 2 and 34 are closed by the outer wall 40 of the drum 6. The air inlet pathway thus has a small cross-sectional area and a substantial length.

In the mid engine speed range, the drum 6 is moved into the position shown in Figure 7. In this position air flows through the opening 7 and round only a proportion of the length of the supplemental duct 8 and then through the openings 36 and 38 into the inlet ducts 1 and 2. The inlet air pathway thus has an increased area and a reduced length.

In the high speed position shown in Figure 8, the air flows out of the opening 7 and part of it then flows directly through the openings 36 and 38 into the inlet ducts 36 and 38 whilst the remainder of it flows over half the length of the supplementary duct 8 and then through the opening 39 into the inlet duct 34. The length of all three routes is substantially the same. The inlet air pathway thus has a yet further increased area and reduced length.

It will be appreciated that numerous modifications may be made to this embodiment and that, for instance, the inlet 34 and opening 39 may be omitted to provide an induction system having two different areas but three or more different lengths.

An engine which incorporates an induction system of the type described above will incorporate an engine speed sensor and an actuator, e.g. as described in GB-A-2221954, connected to the drum 6, which are so arranged that the drum is moved between the high and low speed positions as the engine speed passes through a predetermined threshold value.

All the embodiments described above relate to a single inlet port and it will be appreciated that the or each cylinder of the engine may have only one inlet port or it may have two or even more such ports, in which case the induction system will be duplicated the appropriate number of times.

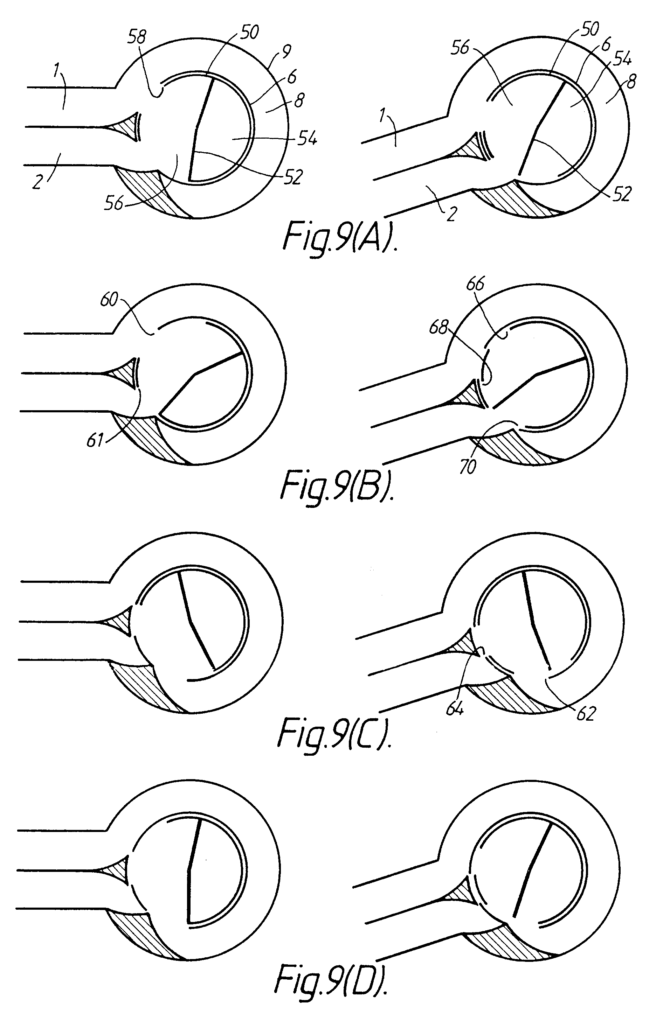

The invention is also applicable to engines using so-called Exhaust Gas Recirculation (EGR) that is to say engines in which, under at least certain load and speed conditions, a proportion of the inlet air is replaced by recycled exhaust gas (REG). Such engines are well known per se and tend to produce lower emissions of nitrogen oxides. The crucial portions of the induction system of the two valves of a twin inlet valve engine using EGR are shown in Figures 9A to 9D. Each inlet port (which is not shown for the sake of clarity) is again connected to first and second parallel inlet ducts 1 and 2, upstream of which is a rotatable drum 50 received within a further rotatable drum 6. Both drums have openings formed in them but these are different for the two inlet ports. Defined between the outer casing 9 and the outer drum 6 is a supplementary duct 8.

Turning firstly to the induction system seen on the left of Figure 9, it will be seen that the inner drum 50 is divided internally into two portions by a partition 52. The first portion 54 contains REG and has no aperture formed in it, for reasons which will become clear below. The second portion 56 contains air and has a single opening 58 extending over nearly 180° formed in its outer wall. The outer drum 6 has two adjacent openings 60 and 61 formed in its outer wall. Figures 9A and 9B illustrate the positions of the drums at high engine speed and high and low load, respectively. As may be seen, the portion 56 of the drum 50 which contains air communicates in both cases directly with both inlet ducts 1 and 2 through the openings 58, 60 and 61, that is to say not via the supplementary duct, notwithstanding the fact that in Figure 9B the inner drum 50 has rotated through about 45°. Figures 9C and 9D illustrate the positions of the drums at low engine speed and high and low load, respectively. As may be seen, the portion 56 of the drum 50 communicates in both cases only with one inlet duct 1 and does so via the supplementary duct 8, notwithstanding the fact that in Figure 9D the inner drum has rotated through about 45°, whereby the pathway to the first inlet port is of reduced area and increased length. The induction system for the first inlet port thus operates in a manner very similar to that described above in connection with Figures 1 to 5.

Turning now to the induction system shown on the right of Figure 9 which is associated with the other inlet port, it will be seen that the inner and outer drums are of the same configuration and this is because they are constituted by longitudinally spaced portions of the same components. However, in this area the outer drum 6 has two apertures 62 and 64 formed in it, whilst the inner drum 50 has two apertures 66,68 which communicate with the portion 56 which contains air and a further aperture 70 which communicates with the portion 54 which contains REG. As may be seen, under the high speed and high load conditions shown in Figure 9A, the portion 56 containing air communicates directly with the two inlet ducts 1 and 2 and no REG passes into them. However, at high speed but low load, the portion 56 containing air does not communicate with the inlet ducts and the portion 54 containing REG communicates with one of the inlet ducts via the openings 70 and 62, as shown in Figure 9B. The air required for combustion is supplied through the other inlet port. At low speed but high load, the portion 56 containing air communicates with one of the inlet ducts via the supplementary duct 8 and no REG is allowed to enter the inlet port, as shown in Figure 9C. Finally, as shown in Figure 9D, under low speed and no load, the portion 54 containing REG communicates with one of the inlet ducts via the supplementary duct 8 and no air is allowed to enter the inlet port; all the necessary air enters via the other inlet port.

The two drums are thus moved independently. The drum 6 is moved in response to engine speed and for this purpose is provided with a speed sensor and actuator of known type. The drum 50 is moved in accordance with engine load and for this purpose is coupled to an actuator connected to a load sensor or e.g. to the engine throttle.

As mentioned above, the drums 6 and 50 associated with the two inlet ports are part of the same components. It will be appreciated that in practice, even with a multi-cylinder engine with two inlet ports per cylinder there will be only two drums, each of which is provided with the numerous openings required for the various ports.

## Claims

1. An induction system for a reciprocating internal combustion engine including an air inlet, a first inlet duct (1) communicating with an inlet port into a cylinder of the engine, a supplementary duct (8) and a second inlet duct (2) which is connected in parallel with the first inlet duct (1) and communicates with the same cylinder and valve means (6) which is movable between a first position in which air flows from the air inlet into the cylinder through the first and second inlet ducts (1,2) and a second position in which air flows from the air inlet into the cylinder only through the first inlet duct (1) via the supplementary duct (8), said valve means includes a cylindrical drum (6) whose interior communicates with the air inlet, characterised in that the first and second inlet ducts (1,2) communicate with the same inlet port and that (6) in the cylindrical drum wall two or more openings (7, 12; 27, 28, 29) are formed, the drum (6) being rotatable about its axis between the second position in which one opening (7; 29) communicates with the supplementary duct (8) and the other opening(s) (12; 27, 28) are blocked and the first position in which two openings (7, 12; 27, 28) communicate with the first and second inlet ducts (1, 2).

2. A system as claimed in Claim 1 characterised in that the supplementary duct (8) is defined by the outer surface of the drum (6) and the inner surface of a housing (9) containing the drum.

3. A system as claimed in Claim 1 characterised in that the drum (6) is rotatably received within a fixed cylinder (20) in which three openings (21, 22, 23) are formed which communicate with the first duct (1), the second duct (2) and the supplementary duct (8), respectively.

4. A system as claimed in any one of the preceding claims characterised by valve means situated at the downstream end of the second duct (2) and by connecting means which connect the valve means to the valve means (6) and are so arranged that the valve means moves between the open and closed positions as the valve means (6) moves between the first and second positions.

5. A system as claimed in Claim 1 characterised in that the drum (6) carries an outwardly extending flap (18) which is so arranged that when the drum (6) is in the first position the flap blocks communication between the first and supplementary ducts (1, 8) and when the drum is in the second position the flap permits communication between the first and supplementary ducts (1, 8) and is substantially contiguous with a wall of the first duct (1).

6. A system as claimed in claim 1 characterised in that a third inlet duct (34) is provided which also communicates with the same inlet port, that the valve means (6) includes a cylindrical drum having inner and outer walls (40,42) which together define the supplementary duct (8) and in which a plurality of openings (7,44,46,48) is formed and that the drum (6) is rotatable between first, second and third positions in which the air inlet communicates with the first inlet duct (1) only via the supplementary duct, with the first and second inlet ducts (1,2) only via a portion of the supplementary duct (8) and with the first, second and third inlet ducts (1,2,34), respectively.

7. A reciprocating internal combustion engine including a plurality of cylinders, characterised in that each cylinder is connected to an induction system as claimed in Claim 1 and that all the drums (6) are connected together to form an integral unit.

8. An engine as claimed in Claim 7 including an inlet valve associated with each cylinder and cooperating with an inlet port formed in a cylinder head, characterised in that the first and second ducts (1, 2) are within a common pipe and are separated by a common partition wall (3).

9. An engine as claimed in Claim 8, characterised in that the partition wall (3) extends beyond the common pipe into the inlet port (4).

10. An engine as claimed in Claim 8 in which each cylinder is connected to an induction system as claimed in Claim 4, characterised in that the partition wall (3) terminates at the junction of the cylinder head with the common pipe.

11. An engine as claimed in any one of Claims 7 to 10 which is of "V" type with the cylinders arranged in two rows, characterised in that each cylinder is connected to an induction system as claimed in Claim 3, that the drums (6) associated with one row of cylinders have two openings (7, 12) formed in them and that the drums (6) associated with the other row of cylinders have three openings (27, 28, 29) formed in them.

12. A reciprocating internal combustion engine having two inlet ports per cylinder characterised by a first induction system as claimed in any one of claims 1 to 6 communicating with one inlet port and a second induction system communicating with the other inlet port, the second induction system including an air inlet (56), a first inlet duct (1) communicating with the inlet port, a second inlet duct (2) which is connected to the same inlet port in parallel with the first inlet duct (1), a supplementary duct (8), a recycled exhaust gas inlet (54), and valve means (6, 50) which is movable between a first position in which the air inlet (56) communicates directly with the first and second inlet ducts (1, 2), a second position in which the air inlet (56) communicates only with the first inlet duct (1) via the supplementary duct (8) and not with the second inlet duct (2), a third position in which the recycled exhaust gas inlet (54) communicates directly with one of the inlet ducts (1, 2) and the air inlet (56) communicates with neither of the inlet ducts and a fourth position in which the recycled exhaust gas inlet (54) communicates with one of the inlet ducts via the supplementary duct (8) and the air inlet (56) communicates with neither of the inlet ducts.

13. An engine as claimed in claim 12 characterised in that the valve means (6,50) comprises a rotatable drum (50) whose interior is divided by a partition (52) into an air inlet (56) and a recycled exhaust gas inlet (54) and in whose wall there is at least one opening (66,68, 70) communicating with each of the air inlet (56) and the recycled exhaust gas inlet (54) and which is accommodated within a further rotatable drum (60) in whose wall there is at least one opening (62,64).

14. An engine as claimed in Claim 12 or Claim 13 characterised in that the air inlet (56) of the first induction system and the air inlet of the second induction system constitute a single elongate air intake space.

## Patentansprüche

1. Ansaugsystem für einen Hubkolbenverbrennungsmotor mit einem Lufteinlaß, einem ersten Einlaßkanal (1), der mit einer Einlaßöffnung in einem Zylinder des Motors in Verbindung steht, einem Zusatzkanal (8) und einem zweiten Einlaßkanal (2), der parallel zu dem ersten Einlaßkanal (1) liegt und mit dem gleichen Zylinder und der gleichen Ventileinrichtung (6) in Verbindung steht, die zwischen einer ersten Stellung, bei der Luft von dem Lufteinlaß durch die ersten und zweiten Einlaßkanäle (1, 2) in den Zylinder strömt, und einer zweiten Stellung bewegbar ist, bei der Luft von dem Lufteinlaß nur durch den ersten Einlaßkanal (1) über den Zusatzkanal (8) in den Zylinder strömt, wobei die Ventileinrichtung eine zylindrische Trommel (6) umfaßt, deren Inneres mit dem Lufteinlaß in Verbindung steht, **dadurch gekennzeichnet, daß** die ersten und zweiten Einlaßkanäle (1, 2) mit der gleichen Einlaßöffnung in Verbindung stehen und daß zwei oder mehr Öffnungen (7, 12; 27, 28, 29) in der Wand der zylindrischen Trommel (6) ausgebildet sind, wobei die Trommel (6) um ihre Achse zwischen der zweiten Stellung, bei der eine Öffnung (7; 29) mit dem Zusatzkanal (8) in Verbindung steht, und die andere Öffnung bzw. die anderen Öffnungen (12; 27, 28) blockiert ist bzw. sind und der ersten Stellung bewegbar ist, bei der zwei Öffnungen (7, 12; 27, 28) mit den ersten und zweiten Einlaßkanälen (1, 2) in Verbindung stehen.

2. System nach Anspruch 1, **dadurch gekennzeichnet, daß** der Zusatzkanal (8) durch die äußere Fläche der Trommel (6) und die innere Fläche eines die Trommel enthaltenden Gehäuses (9) definiert ist.

3. System nach Anspruch 1, **dadurch gekennzeichnet, daß** die Trommel (6) drehbar innerhalb eines feststehenden Zylinders (20) aufgenommen ist, in dem drei Öffnungen (21, 22, 23) ausgebildet sind, die mit dem ersten Kanal (1), dem zweiten Kanal (2) und dem Zusatzkanal (8) in Verbindung stehen.

4. System nach einem der vorhergehenden Ansprüche, **gekennzeichnet durch** eine an dem stromabwärtigen Ende des zweiten Kanals (2) gelegene Ventileinrichtung und durch Verbindungsmittel, die die Ventileinrichtung mit der Ventileinrichtung (6) verbinden und derart angeordnet sind, daß die Ventileinrichtung sich zwischen der Öffnungs- und der Schließstellung bewegt, wenn sich die Ventileinrichtung (6) zwischen der ersten und der zweiten Stellung bewegt.

5. System nach Anspruch 1, **dadurch gekennzeichnet, daß** die Trommel (6) eine sich nach außen erstreckende Klappe (18) trägt, die derart angeordnet ist, daß dann, wenn sich die Trommel (6) in der ersten Stellung befindet, die Klappe die Verbindung zwischen dem ersten und dem Zusatzkanal (1, 8) blockiert, und dann, wenn die Trommel sich in der zweiten Stellung befindet, die Klappe die Verbindung zwischen dem ersten und dem Zusatzkanal (1, 8) gestattet und im wesentlichen einer Wand des ersten Kanals (1) benachbart ist.

6. System nach Anspruch 1, **dadurch gekennzeichnet, daß** ein dritter Einlaßkanal (34) vorgesehen ist, der auch mit der gleichen Einlaßöffnung in Verbindung steht, daß die Ventileinrichtung (6) eine zylindrische Trommel mit inneren und äußeren Wänden (40, 42) umfaßt, die zusammen den Zusatzkanal (8) bilden und in der eine Vielzahl von Öffnungen (7, 44, 46, 48) ausgebildet ist, und daß die Trommel (6) zwischen ersten, zweiten und dritten Stellungen drehbar ist, bei denen der Lufteinlaß mit dem ersten Einlaßkanal (1) nur über den Zusatzkanal in Verbindung steht, mit den ersten und zweiten Einlaßkanälen (1, 2) nur über einen Abschnitt des Zusatzkanals (8) und mit den ersten, zweiten bzw. dritten Einlaßkanälen (1, 2, 34) in Verbindung steht.

7. Hubkolbenverbrennungsmotor, umfassend eine Vielzahl von Zylindern, **dadurch gekennzeichnet, daß** jeder Zylinder mit einem Ansaugsystem nach Anspruch 1 verbunden ist und alle Trommeln (6) zur Bildung einer integralen Einheit miteinander verbunden sind.

8. Motor nach Anspruch 7, umfassend ein Einlaßventil, das jedem Zylinder zugeordnet ist und mit einer in einem Zylinderkopf ausgebildeten Einlaßöffnung zusammenwirkt, **dadurch gekennzeichnet, daß** die ersten und zweiten Kanäle (1, 2) innerhalb eines gemeinsamen Rohrs liegen und durch eine gemeinsame Trennwand (3) getrennt sind.

9. Motor nach Anspruch 8, **dadurch gekennzeichnet, daß** die Trennwand (3) sich über das gemeinsame Rohr hinaus in die Einlaßöffnung erstreckt.

10. Motor nach Anspruch 8, bei dem jeder Zylinder mit einem Ansaugsystem wie in Anspruch 4 beansprucht verbunden ist, **dadurch gekennzeichnet, daß** die Trennwand (3) an der Verbindung des Zylinderkopfs mit dem gemeinsamen Rohr endet.

11. Motor nach einem der Ansprüche 7 bis 10 der vom "V"-Typ ist, wobei die Zylinder in zwei Reihen angeordnet sind, **dadurch gekennzeichnet, daß** jeder Zylinder mit einem Ansaugsystem nach Anspruch 3 verbunden ist, daß die Trommeln (6), die einer Reihe von Zylindern zugeordnet sind, zwei darin ausgebildete Öffnungen (7, 12) aufweisen, und daß die Trommeln (6), die der anderen Reihe von Zylindern zugeordnet sind, drei darin ausgebildete Öffnungen (27, 28, 29) aufweisen.

12. Hubkolbenverbrennungsmotor mit zwei Einlaßöffnungen pro Zylinder, **gekennzeichnet durch** ein erstes Ansaugsystem nach einem der Ansprüche 1 bis 6, das mit einer Einlaßöffnung in Verbindung steht und ein zweites Ansaugsystem, das mit der anderen Einlaßöffnung in Verbindung steht, wobei das zweite Ansaugsystem einen Lufteinlaß (56), einen ersten Einlaßkanal (1), der mit der Einlaßöffnung in Verbindung steht, einen zweiten Einlaßkanal (2), der mit der gleichen Einlaßöffnung parallel zu dem ersten Einlaßkanal (1) verbunden ist, einem Zusatzkanal (8), einem Einlaß (54) für Rückführabgas und einer Ventileinrichtung (6, 50), die zwischen einer ersten Stellung, bei der der Lufteinlaß (56) direkt mit den ersten und zweiten Einlaßkanälen (1, 2) in Verbindung steht, einer zweiten Stellung, bei der der Lufteinlaß (56) nur mit dem ersten Einlaßkanal (1) über den Zusatzkanal (8) und nicht mit dem zweiten Einlaßkanal (2) in Verbindung steht, einer dritten Stellung, bei der der Einlaß (54) für Rückführabgas direkt mit einem der Einlaßkanäle (1, 2) in Verbindung steht und der Lufteinlaß (56) mit keinem der Einlaßkanäle in Verbindung steht, und einer vierten Stellung bewegbar ist, bei der der Einlaß (54) für das Rückführabgas mit einem der Einlaßkanäle über den Zusatzkanal (8) in Verbindung steht und der Lufteinlaß (56) mit keinem der Einlaßkanäle in Verbindung steht.

13. Motor nach Anspruch 12, **dadurch gekennzeichnet, daß** die Ventileinrichtung (6, 50) eine drehbare Trommel (50) aufweist, deren Inneres durch eine Trennwand (52) in einen Luftdurchtritt (56) und einen Einlaß (54) für Rückführabgas unterteilt ist und in deren Wand sich mindestens eine Öffnung (66, 68, 70) befindet, die mit dem Lufteinlaß (56) und dem Einlaß (54) für Rückführabgas in Verbindung steht und die innerhalb einer weiteren drehbaren Trommel (60) untergebracht ist, in deren Wand sich mindestens eine Öffnung (62, 64) befindet.

14. Motor nach Anspruch 12 oder Anspruch 13, **dadurch gekennzeichnet, daß** der Lufteinlaß (56) des ersten Ansaugsystems und der Lufteinlaß des zweiten Ansaugsystems einen einzigen länglichen Luftansaugraum bilden.

## Revendications

1. Système d'admission pour un moteur à combustion interne alternatif comprenant une entrée d'air, un premier conduit d'admission (1) communiquant avec un orifice d'entrée débouchant dans un cylindre du moteur, un conduit supplémentaire (8) et un deuxième conduit d'admission (2) qui est branché en parallèle avec le premier conduit d'admission (1) et communique avec ledit cylindre, et un moyen obturateur (6) qui peut se déplacer entre une première position, dans laquelle l'air s'écoule de l'entrée d'air dans le cylindre en passant par les premier et deuxième conduits d'admission (1, 2), et une deuxième position, dans laquelle l'air s'écoule de l'entrée d'air dans le cylindre en passant exclusivement par le premier conduit d'admission (1), par l'intermédiaire du conduit supplémentaire (8), ledit moyen obturateur comprenant un tambour cylindrique (6) dont l'intérieur communique avec l'entrée d'air, caractérisé en ce que les premier et deuxième conduits d'admission (1, 2) communiquent avec le même orifice d'admission et que deux ou plus de deux ouvertures (7, 12 ; 27, 28, 29) sont formées dans la paroi du tambour cylindrique (6), le tambour (6) pouvant tourner autour de son axe entre la deuxième position, dans laquelle une ouverture (7 ; 29) communique avec le conduit supplémentaire (8) et l'autre ou les autres ouvertures (12 ; 27; 28) sont fermées, et la première position, dans laquelle deux ouvertures (7, 12 ; 27, 28) communiquent avec les premier et deuxième conduits d'admission (12).

2. Système selon la revendication 1, caractérisé en ce que le conduit supplémentaire (8) est défini par la surface extérieure du tambour (6) et la surface intérieure d'un boîtier (9) qui contient le tambour.

3. Système selon la revendication 1, caractérisé en ce que le tambour (6) est monté rotatif dans un cylindre fixe (20) dans lequel sont formées trois ouvertures (21, 22, 23) qui communiquent respectivement avec le premier conduit (1), le deuxième conduit (2) et le conduit supplémentaire (8).

4. Système selon une quelconque des revendications précédentes, caractérisé par des moyens à soupape situés à l'extrémité aval du deuxième conduit (2) et par des moyens de liaison qui relient les moyens à soupape au moyen obturateur (6) et sont agencés de manière que les moyens à soupape se déplacent entre la position ouverte et la position fermée lorsque le moyen obturateur (6) se déplace entre les première et deuxième positions.

5. Système selon la revendication 1, caractérisé en ce que le tambour (6) porte un volet (18) s'étendant vers l'extérieur qui est agencé de manière que, lorsque le tambour (6) se trouve dans la première position, le volet ferme la communication entre le premier conduit et le conduit supplémentaire (1, 8) et que, lorsque le tambour est dans la deuxième position, le volet admette la communication entre le premier conduit (1) et le conduit supplémentaire (8) et soit sensiblement contigu avec une paroi du premier conduit (1).

6. Système selon la revendication 1, caractérisé en ce qu'il est prévu un troisième conduit d'admission (34) qui communique aussi avec le même orifice d'admission, que le moyen obturateur (6) comprend un tambour cylindrique ayant des parois intérieure et extérieure (40, 42) qui, ensemble définissent le conduit supplémentaire (8) et dans lesquelles sont formées plusieurs ouvertures (16, 44, 46, 48) et en ce que le tambour (6) peut tourner entre des première, deuxième et troisième positions dans lesquelles l'entrée d'air communique respectivement avec le premier conduit d'admission (1) exclusivement par l'intermédiaire du conduit supplémentaire, avec les premier et deuxième conduits d'admission (1, 2) exclusivement par l'intermédiaire d'une partie du conduit supplémentaire (8) et avec les premier, deuxième et troisième conduits d'admission (1, 2, 34).

7. Moteur à combustion interne alternatif comprenant une pluralité de cylindres, caractérisé en ce que chaque cylindre est relié à un système d'admission selon la revendication 1 et en ce que tous les tambours (6) sont reliés les uns aux autres pour former une unité d'un seul tenant.

8. Moteur selon la revendication 7, comprenant une soupape d'admission associée à chaque cylindre et coopérant avec un orifice d'admission formé dans une culasse, caractérisé en ce que les premier et deuxième conduits (1, 2) sont formés dans une pipe commune et sont séparés par une cloison commune (3).

9. Moteur selon la revendication 8, caractérisé en ce que la cloison (3) se prolonge au-delà de la pipe commune pour s'engager dans l'orifice d'admission (4).

10. Moteur selon la revendication 8, dans lequel chaque cylindre est relié à un système d'admission selon la revendication 4, caractérisé en ce que la cloison (4) se termine à la jonction entre la culasse et la pipe commune.

11. Moteur selon une quelconque des revendications 7 à 10, qui est du type "en V" dans lequel les cylindres sont agencés en deux rangées, caractérisé en ce que chaque cylindre est relié à un système d'admission selon la revendication 3, en ce que les tambours (6) associés à une rangée de cylindres ont deux ouvertures (7, 12) qui y sont formées et en ce que les tambours (6) associés à l'autre rangée de cylindres ont trois ouvertures (27, 28, 29) qui y sont formées.

12. Moteur à combustion interne alternatif ayant deux orifices d'admission par cylindre, caractérisé par un premier système d'admission selon une quelconque des revendications là 6, qui communique avec un orifice d'admission et un deuxième système d'admission qui communique avec l'autre orifice d'admission, le deuxième système d'admission comprenant une entrée d'air (56), un premier conduit d'admission (1) communiquant avec l'orifice d'admission, un deuxième conduit d'admission (2) qui est relié au même orifice d'admission, en parallèle avec le premier conduit d'admission (1), un conduit supplémentaire (8), une entrée de gaz d'échappement recyclés (54) et un moyen obturateur (6, 50) qui est mobile entre une première position, dans laquelle l'entrée d'air (56) communique directement avec les premier et deuxième conduits d'admission (1, 2), une deuxième position dans laquelle l'entrée d'air (56) communique exclusivement avec le premier conduit d'admission (1) par l'intermédiaire du conduit supplémentaire (8) et non pas avec le deuxième conduit d'admission (2), une troisième position dans laquelle l'entrée de gaz d'échappement recyclés (54) communique directement avec l'un des conduits d'admission (1, 2) et l'entrée d'air (56) ne communique avec aucun des conduits d'admission, et une quatrième position dans laquelle l'entrée (54) des gaz d'échappement recyclés communique avec l'un des conduits d'admission par l'intermédiaire du conduit supplémentaire (8) et l'entrée d'air (56) ne communique avec aucun des conduits d'admission.

13. Moteur selon la revendication 12, caractérisé en ce que le moyen obturateur (6, 50) comprend un tambour tournant (50) dont l'intérieur est divisé par une cloison (52) en une entrée d'air (56) et une entrée de gaz d'échappement recyclés (54) et dans la paroi duquel se trouve au moins une ouverture (66, 68, 70) qui communique avec chacune des entrées, que constituent l'entrée d'air (56) et l'entrée de gaz d'échappement recyclés (54) et qui est logé dans un autre tambour tournant (60) dans la paroi duquel se trouve au moins une ouverture (62,64).

14. Moteur selon la revendication 12 ou la revendication 13, caractérisé en ce que l'entrée d'air (56) du premier système d'admission et l'entrée d'air du deuxième système d'admission constituent un unique espace d'entrée d'air de forme allongée.
